(19) Europäisches Patentamt
European Patent Office
Office européen des brevets

(11) **EP 2 207 316 B1**

(12) **EUROPEAN PATENT SPECIFICATION**

(45) Date of publication and mention
of the grant of the patent:
**23.03.2011 Bulletin 2011/12**

(51) Int Cl.:
**H04L 27/26** $^{(2006.01)}$

(21) Application number: **09290014.1**

(22) Date of filing: **08.01.2009**

(54) **Coherent optical intradyne OFDM**

Kohärenter optischer Intradyn-OFDM

OFDM intradyne optique cohérent

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**14.07.2010 Bulletin 2010/28**

(73) Proprietor: **Alcatel Lucent**
**75008 Paris (FR)**

(72) Inventors:
• **Buchali, Fred**
**71336 Waiblingen (DE)**

• **Dischler, Roman**
**70469 Stuttgart (DE)**

(74) Representative: **Schmidt, Werner Karl**
**Alcatel Lucent**
**Intellectual Property & Standards**
**70430 Stuttgart (DE)**

(56) References cited:
**EP-A- 1 724 941    US-A1- 2006 171 488**

• **HANZO, L. ET AL.: "OFDM and MC-CDMA" 1 July 2003 (2003-07-01), WILEY , UK , XP002543360 * page 131 * * page 918 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the field of coherent optical OFDM transmission systems. In particular, the invention relates to the estimation of intermediate frequencies and the down-conversion of OFDM signals into a baseband, in optical coherent heterodyne or intradyne OFDM receivers.

Coherent optical OFDM systems often suffer from frequency offsets between the actual carrier frequency of the transmission signal and a local oscillator (LO) at the optical receiver. Due to such frequency offsets the optical OFDM signal is down-converted to an intermediate frequency instead of being down-converted directly into its baseband, which typically is positioned around a OFDM center frequency, e.g. at the frequency zero. The reason for such frequency offsets and, consequently, the reason for such intermediate down-conversions is that the control of the LO frequency and its locking to the carrier frequency would require an optical phase locked loop (PLL) with high precision. This, however, is a complex and cost-intensive approach.

In order to compensate such frequency offsets, additional down-conversion of the optical carrier frequency in the analog or digital domain may be required. Such down-conversion in the analog or digital domain requires an estimation of the frequency offset. This may be done by complex signal processing schemes which usually employ significant buffering of signal sequences and exhibit high memory and processing requirements. Such frequency offset estimation schemes may be used in wireless and wireline systems, where they benefit from the relatively low data rates: These schemes are possible as radio and wireline OFDM systems use relatively low carrier frequencies and data rates. US2006/0171488 describes a method and system for estimating frequency offsets in wireless MIMO systems. The method involves coarse and fine frequency offset estimation. EP 1724941 describes a radio transmission system with improved phase noise characteristics. The system introduces a pilot signal at the transmitter which is isolated using a band pass filter at the receiver.

On the other hand, optical OFDM systems use high carrier frequencies, e.g. a 193 THz carrier, and operate at significantly higher data rates. Furthermore, lasers used for optical OFDM systems often exhibit a relatively high level of phase noise. Due to these reasons, known methods for frequency offset estimation used for wireless or wireline OFDM systems are not readily applicable to optical OFDM systems. This is mainly due to the excessive memory and processor requirements of the prior art signal processing schemes. Therefore, the present invention describes a method and a system for determining a frequency offset, an offset frequency or an intermediate frequency and for performing the subsequent down-conversion of the OFDM signal into the baseband. The proposed method and system may deal with large frequency offsets and with a large phase noise contribution.

The proposed frequency estimation system uses the transmission of a training sequence for performing a first, so-called "raw", estimation of the intermediate frequency. The received OFDM signal may then be down-converted using the raw estimate of the frequency. A subsequent isolation or filtering step may be employed to perform a second, so called "fine", frequency determination, which may be followed by a subsequent down-conversion using the fine estimate of the intermediate frequency.

According to one aspect of the invention, a method for determining an intermediate frequency at an optical OFDM receiver is disclosed. The method is also directed to down-converting a received OFDM signal into a baseband. The OFDM receiver may be a coherent OFDM receiver where the incoming optical OFDM signal is superimposed with a continuous wave local oscillator (LO). If the frequency of the LO is matched to the carrier frequency of the incoming OFDM signal, the optical receiver is called a homodyne receiver, otherwise the optical OFDM receiver is called a heterodyne receiver. Due to the fact that an exact match of the carrier frequency and the LO frequency is difficult to maintain, even in homodyne OFDM receivers, a frequency offset between the carrier frequency and the LO frequency is to be expected. The proposed method may then be applied to determine such frequency offset. In the following, the terms intermediate frequency, frequency offset and offset frequency are used synonymously.

The method is preferably performed in the electrical, digital domain, typically after optical to electrical conversion, and comprises the step of receiving an OFDM signal at the OFDM receiver comprising a training sequence. In general, an OFDM signal comprises a plurality of OFDM sub-carriers. Each OFDM sub-carrier is modulated with a certain modulation scheme, such as QAM or PSK, at a given symbol rate. Some of the OFDM sub-carriers may carry training sequences within one or more OFDM symbol for the measurement of channel conditions, e.g. the equalizer gain for each sub-carrier. Such training sequences may also be used for time synchronization to avoid inter-symbol interference (ISI) and frequency synchronization to avoid inter-carrier interference (ICI). OFDM signals which comprise training sequences are referred to as training OFDM signals.

Furthermore, a pilot carrier, also called a pilot sub-carrier, may be introduced into the OFDM signal. This is preferably done at the OFDM center frequency, e.g. the frequency zero, but it may be inserted at any pre-defined OFDM sub-carrier frequency. It should also be noted that the OFDM sub-carriers do not necessarily have to be distributed equally around the OFDM center frequency. In particular, OFDM sub-carriers may be switched on and off in accordance with the characteristics of the optical transmission channel. The pilot sub-carrier may be introduced continuously, e.g. by applying a DC voltage at the modulator on the OFDM transmitter side.

The training sequence is designed such that, at a corresponding OFDM transmitter, the training sequence comprises T identical training sub-sequences. In other words, a training sequence comprising T identical and redundant training sub-sequences is transmitted over the optical transmission channel and received at the OFDM receiver. T should at least take on the value of two and may be increased to values T greater than two, depending on the requirements of the particular application.

The length of the overall training sequence may be kept constant, in order to keep the overall overhead unchanged. Such overhead is caused by the insertion of training-related traffic in addition to payload traffic and it obviously increases, if the length of training sequences is increased. On the other hand, it may be beneficial to increase the total length of the training sequence. This may be required when T increases such that the length of the sub-sequences drops below a pre-defined level. Such pre-defined level may be given by a certain minimum number of samples that needs to be contained in a training sub-sequence, in order to allow for a reliable estimation of the intermediate frequency.

At the corresponding OFDM transmitter, the pilot sub-carrier corresponds to a pre-determined OFDM sub-carrier, i.e. the frequency of the pilot sub-carrier corresponds to the frequency of a pre-determined OFDM sub-carrier. Such pre-determined OFDM sub-carrier frequency may be an OFDM center frequency which may be the frequency zero. Depending on the OFDM sub-carrier management, the OFDM sub-carriers may be evenly or freely distributed around the OFDM center frequency. By way of example, it may be required to switch off certain OFDM sub-carriers in order to avoid certain deteriorated frequency bands in an optical transmission channel.

According to a further aspect of the invention, the proposed method stipulates that for the purpose of transmission of the training sequence, i.e. for the purpose of transmission of the training OFDM signal, the OFDM sub-carrier spacing has been increased by a factor of P. This may be achieved by reducing the number of used OFDM sub-carriers by a factor P. In this context, P should be greater than one and selected such that the "to be determined" intermediate frequency is smaller than half of P times the OFDM sub-carrier spacing. In other words, P is selected such that the value given by P/2 times the OFDM sub-carrier spacing is greater than a maximum expected intermediate frequency. It should be noted that in this context the OFDM sub-carrier spacing means the unmodified OFDM sub-carrier spacing used for the transmission of the OFDM signals, i.e. the OFDM signals excluding the training OFDM signals. By way of example, if the OFDM sub-carrier spacing is 40MHz and the "to be determined" intermediate frequency or the maximum expected intermediate frequency is in the order of 100 MHz, then P should be selected greater or equal to 5. Consequently, the described method may be used to determine intermediate frequencies which are smaller than half the OFDM sub-carrier spacing.

The proposed method proceeds by determining the phase shift between two training sub-sequences received at the OFDM receiver. By way of example, the phase shift between two successive or subsequent training sub-sequences may be determined. This step is preferably performed for each sub-carrier which comprises a training sequence. This determination step is based on the insight that two identical symbols or sequences that have been sent from the OFDM transmitter should also be identical at the OFDM receiver. If, however, the OFDM signal has incurred a frequency offset during transmission and/or the LO at the OFDM receiver has a frequency offset compared to the LO at the OFDM transmitter, then this frequency offset can be determined from analyzing the received sequences. In such cases two successive sequences received at the OFDM receiver should be phase shifted to one another by a value which is proportional to the intermediate frequency, i.e. proportional to the frequency offset. This also applies, if the two selected training sub-sequences received at the OFDM receiver are not directly successive. Consequently, the phase shift between the two sequences, which are either directly or indirectly successive to one another, is associated with the intermediate frequency.

In a further step, a raw estimate of the intermediate frequency is determined based on the determined phase shift between the training sub-sequences. By way of example, a plurality of phase shifts between a plurality of pairs of training sub-sequences may be determined. The raw estimate of the intermediate frequency may then be determined subject to an averaging of the phase shifts between the plurality of training sub-sequences received at the OFDM receiver. As mentioned above, these training sub-sequences may be successive or subsequent training sub-sequences. Using such averaging step, the accuracy of the raw estimate of the intermediate frequency may be improved, i.e. the variance or standard deviation of the estimate may be reduced. The average may be calculated by summing up the phase shift between the (T-1) pairs of neighboring training sub-sequences and by dividing the sum by the value (T-1). It may also be performed by determining the phase shift between all possible pairs of training sub-sequences, i.e. between (T-1)! pairs. Then the average phase shift, while taking into account the respective intervals between the training sub-sequences, may be determined. Such average phase shift may also be used as the basis for determining a raw estimate of the intermediate frequency.

The method proceeds by isolating the pilot sub-carrier using the raw estimate of the intermediate frequency. If the raw estimate of the intermediate frequency corresponded to the exact intermediate frequency and if the frequency of the pilot sub-carrier at the OFDM transmitter corresponded to the frequency zero, then the relative frequency of the isolated pilot sub-carrier should be zero. This relative frequency is also referred to as the residual frequency offset. However, typically the raw estimate of the intermediate frequency has a certain standard deviation. By way of example, such standard deviation may be the standard deviation of a given, e.g. a Gaussian, distribution. Such standard deviation describes the probability that a current value of the intermediate frequency lies within a certain interval around the raw estimate of the intermediate frequency.

Due to such standard deviation, the relative frequency of the isolated pilot sub-carrier at a particular instant may be non-zero and indicate the deviation of the raw estimate to the exact current value of the intermediate frequency. Consequently, the intermediate frequency is obtained as the sum of the raw estimate of the intermediate frequency and the determined frequency of the isolated pilot sub-carrier. The isolated pilot sub-carrier may also be used to directly down-convert a received OFDM signal into the baseband by using the isolated OFDM pilot sub-carrier for demodulation. Such received OFDM signal may be the training OFDM signal and/or any other OFDM signal.

It should be noted that the determination of the raw estimate of the intermediate frequency is preferably performed periodically upon receipt of a training sequence, i.e. upon receipt of a training OFDM signal. Due to the fact that training sequences may only be transmitted at pre-defined time instances and possibly only within a subset of OFDM sub-carriers, the determination of the raw estimate of the intermediate frequency may only be performed at such time instances and for such OFDM sub-carriers. On the other hand, the pilot sub-carrier is preferably transmitted on a continuous basis, i.e. within all OFDM signals, such that the isolation of the pilot sub-carrier may be performed continuously. Alternatively, it may be beneficial that the training OFDM signal only comprises the training sequences, whereas the other OFDM signals comprise a pilot sub-carrier.

According to another aspect of the invention, the step of determining the phase shift between two successive or neighboring received training sub-sequences comprises the steps of determining the phase shift between two successive or subsequent training sub-sequences received at the OFDM receiver for a plurality of OFDM sub-carriers and then averaging the determined phase shifts for the plurality of OFDM sub-carriers. This may be applied, if training sequences, comprising each a set of identical successive sub-sequences, are transmitted over a plurality of sub-carriers. The average phase shift across a plurality of OFDM sub-carriers may also be determined by using the formula for estimating the phase shift $\hat{\varepsilon}$ known from the Moose method and provided on page 17 of the description. This method for averaging across a plurality of OFDM sub-carriers allows the consideration of the amplitude of the phase shifted sequences, which may be beneficial as notably in case of small amplitudes the determined phase shifts may be erroneous. In general, it may be stated that the average phase shift across a plurality of OFDM sub-carriers may be determined in consideration of the amplitude of the phase shifted sequences.

The averaging across a plurality of sub-carriers may improve the accuracy of the raw estimate. The accuracy may also be improved if the step of determining a raw estimate of the intermediate frequency comprises the steps of determining the phase shift between all (T-1) pairs of succeeding training sub-sequences received at the OFDM receiver and by subsequently determining the average phase shift thereof.

According to a further aspect of the invention, the pilot sub-carrier is isolated or filtered by using an adaptive band pass filter with a center frequency corresponding to the raw estimate of the intermediate frequency plus the pre-determined OFDM sub-carrier frequency. Such adaptable or adaptive band pass filters may be implemented by look-up tables which provide the filter coefficients for a given center frequency. Alternatively, the step of isolating the pilot sub-carrier may comprise the steps of down-converting the OFDM signal by a frequency shift corresponding to the raw estimate of the intermediate frequency plus the pre-determined OFDM sub-carrier frequency and by subsequently isolating the pilot carrier using a low pass filter. This alternative method has the benefit of using a fixed low pass filter, thereby omitting the need for a look-up table. On the other hand, an additional down-conversion stage is required, which may be complex to implement at the bitrates encountered in optical transmission system.

Preferably, the bandwidth of the filter, i.e. the bandwidth of the band pass filter or two times the cut-off frequency of the low pass filter, is smaller than the OFDM sub-carrier spacing. This condition ensures that the filter does not isolate or pass another OFDM sub-carrier different from the pilot sub-carrier. If, however, the standard deviation of the raw estimate of the intermediate frequency is high, it may occur that the frequency of the pilot sub-carrier cannot be isolated by such filter. In particular, this may occur, if the phase noise contribution of the laser used in the optical transmission system is relatively high. For such high variance or standard deviation cases, the condition with regards to the bandwidth of the filter may be modified to stipulate that the bandwidth of the filters is associated with the phase noise of lasers employed at the OFDM transmitter and/or the OFDM receiver. In other words, the bandwidth of the filters may be selected, such that the residual frequency offset passes the bandwidth filter with a pre-determined probability, even when the OFDM transmission system is submitted to severe phase noise.

Furthermore, it may be beneficial that one or more OFDM sub-carrier around the pre-determined OFDM sub-carrier frequency, e.g. the OFDM center frequency, is switched off, in order to allow for a reliable isolation or filtering of the pilot sub-carrier. By way of example, the phase noise contribution may be such that the standard deviation of the raw estimate of the intermediate frequency is significantly increased. In order to ensure a reliable isolation of the pilot sub-carrier, the filter bandwidth may be chosen to be 3 to 4 times the standard deviation of the raw estimate. In such cases, the bandwidth may be larger than the OFDM sub-carrier spacing, thereby precluding the unambiguous isolation of the pilot sub-carrier, as it may be confounded with at least one OFDM sub-carrier. Therefore, it may be beneficial to switch off the OFDM sub-carriers in the direct neighborhood of the pilot sub-carrier, in order to allow for an unambiguous isolation of the pilot sub-carrier, even when using large filter bandwidths.

According to another aspect of the invention, the raw estimate of the intermediate frequency is fed back to a local oscillator at the OFDM receiver and the local oscillator frequency is controlled by the raw estimate of the intermediate frequency. By way of example, this feedback loop may be used to lock the local oscillator frequency to the carrier frequency. This may be achieved by controlling the LO frequency such that the raw estimate of the intermediate frequency is maintained at a pre-determined value. It may thereby be possible to achieve homodyne detection with very low frequency offset. In addition, the raw estimate of the intermediate frequency may also be fed back to a local oscillator at the OFDM transmitter. Then the local oscillator frequency and the selection of OFDM sub-carriers may be controlled by the raw estimate of the intermediate frequency. The feedback to the OFDM transmitter may be performed using higher level protocols, such as ODU signaling. The control of the local oscillator frequency at the OFDM transmitter may be used to optimize the overall transmission capacity and quality of the optical transmission system.

According to a further aspect of the invention, a system for determining the intermediate frequency at an optical OFDM receiver is provided. Such OFDM receiver may be homodyne or heterodyne. The system may also be used for down-converting an OFDM signal into a baseband. The system is designed to execute the method as described above. In one embodiment it comprises a reception unit for receiving an OFDM signal at the optical OFDM receiver comprising a training sequence and a pilot sub-carrier. Such OFDM signal is referred to as training OFDM signal. At a corresponding OFDM transmitter the training sequence comprises T identical training sub-sequences and the pilot sub-carrier corresponds to a pre-determined OFDM sub-carrier, e.g. the frequency of the pilot sub-carrier corresponds to the OFDM center frequency.

In certain embodiments, the OFDM sub-carrier spacing may have been increased by a factor P, e.g. by reducing the number of OFDM sub-carriers by a factor P for the transmission of the training OFDM signal, i.e. for the transmission of the training sequence. Preferably, P is greater than 1 and is selected such that the "to be determined" intermediate frequency is smaller than half of P times the OFDM sub-carrier spacing. In other words, P is selected such that P/2 times the OFDM sub-carrier spacing is greater than the maximum expected intermediate frequency. It may be beneficial to set P equal to T, i.e. to select a number of training sub-sequences which is equal to the number by which the OFDM sub-carrier spacing has been increased.

The system may further comprise a phase shift determination unit for determining the phase shift between two training sub-sequences received at the OFDM receiver. Such two training sub-sequences are preferably successive training sub-sequences. The system may further comprise an intermediate frequency determination unit for determining a raw estimate of the intermediate frequency based on the determined phase shift. In certain embodiments the raw estimate of the intermediate frequency may be determined by determining the average phase shift between a plurality of successive training sub-sequences received at the OFDM receiver.

Furthermore, the system may comprise a filter unit for isolating the pilot sub-carrier using the raw estimate of the intermediate frequency. The intermediate frequency is given as the sum of the raw estimate of the intermediate frequency and the frequency of the isolated pilot sub-carrier. In addition, the system may comprise a down-conversion unit for down-converting the OFDM signal using the isolated pilot sub-carrier. This way, current phase distortions of the OFDM signal may be compensated as such phase distortions are also reflected in the isolated pilot sub-carrier.

It should be noted that the above mentioned aspects of the invention may be combined with one another or extracted from one another in an arbitrary manner. In particular, the method and system for determining a raw estimate for an intermediate frequency which is greater than half the OFDM sub-carrier spacing may be considered as a stand-alone solution for proving such estimates. As outlined above such method comprises the steps of receiving, at an optical OFDM receiver, a training OFDM signal comprising a training sequence, wherein the training sequence, when sent at a corresponding OFDM transmitter, comprises T identical training sub-sequences. Then the method determines a phase shift between two training sub-sequences received at the OFDM receiver and determines a first estimate of the intermediate frequency based on the determined phase shift. In certain embodiments, T is greater than two and a plurality of phase shifts are determined for a corresponding plurality of pairs of training sub-sequences. Then the raw estimate of the intermediate frequency may be determined based on the average of the plurality of phase shifts.

It should also be noted that the described methods are preferably performed in the electrical domain. Typically, at the OFDM receiver, an optical OFDM signal is received and superimposed with a LO before being converted into the electrical domain. In general, the resulting electrical OFDM signal is not exactly down-converted into the baseband and still has an intermediate frequency. The determination of this intermediate frequency and a sub-sequent down-conversion into the baseband may be performed with the method and system described in this document.

The objects and features of the invention will become apparent from the following description of preferred embodiments. The present invention is described in the hollowing by referring to exemplary embodiments illustrated schematically in the accompanying figures, wherein

Fig. 1 shows schematically an embodiment of an optical OFDM receiver;

Fig. 2 shows an embodiment of the frequency estimation system according to the invention;
Fig. 3 illustrates a training sequence and its partitioning into training sub-sequences;
Fig. 4a illustrates an OFDM signal spectrum comprising a pilot carrier prior to "raw down-conversion";
Fig. 4b illustrates an OFDM signal spectrum comprising a pilot carrier after "raw down-conversion"; and
Fig. 5 shows a further embodiment of the frequency estimation system according to the invention.

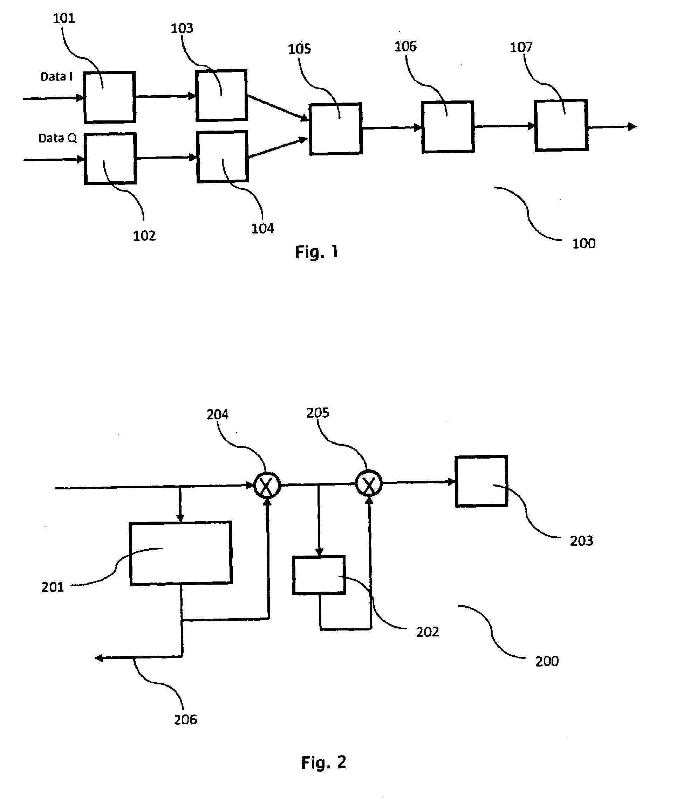

Fig. 1 illustrates schematically an optical OFDM receiver 100, which may be a coherent optical receiver. The basic idea behind coherent detection consists of combining the received optical signal with a continuous-wave (CW) optical field before it lights the photo-detectors 101, 102 shown in Fig. 1. The CW field is typically generated locally at the optical receiver using a narrow-linewidth laser, which is called a local oscillator (LO). The combination of the received optical signal with the LO may precede the photo-detectors 101, 102 illustrated in Fig. 1. Depending on whether the LO exhibits exactly the carrier frequency of the optical signal or not, two types of coherent detection are known. If the frequency of the LO coincides with the carrier frequency of the optical signal, the detection scheme is known as homodyne detection. Otherwise, if the frequency of the LO differs from the carrier frequency of the optical signal, the detection scheme is called heterodyne detection. In the latter case, the optical power at the photo-detectors 101, 102 oscillates at a frequency known as the intermediate frequency which equals the difference between the carrier frequency of the optical signal and the frequency of the LO. The intermediate frequency may also be referred to as the offset frequency or as the frequency offset.

It should be noted that due to the difficulty of aligning the carrier frequency of the received optical signal and the frequency of the LO, homodyne detection is rather complex. Furthermore, due to distortions on the transmission channel, the carrier frequency of an optical signal may incur frequency and/or phase offsets which may not be tracked by the local oscillator at the receiver. Consequently, even in homodyne detection schemes an estimation and a subsequent compensation of a frequency offset may be required. The described estimation method and system may also be applied to the estimation of such offset frequencies in homodyne OFDM receivers.

A particular variant of the heterodyne detection is the so-called intradyne detection, for which the frequency offset between the carrier frequency of the optical signal and the frequency of the LO is smaller than the bandwidth of the optical signal. By way of example, the signal bandwidth may be roughly 20-100 GHz, whereas typical frequency offsets or intermediate frequencies are a few hundred MHz up to 1 or 2 GHz.

As already indicated, Fig. 1 illustrates the in-phase (I) and quadrature-phase (Q) components of an optical signal after optional superimposition with the LO signal. This optical input signal is converted into the electrical domain by a set of o/e (optical/electrical) converters or photo-detectors 101, 102. The electrical signals are fed into a set of Analog-to-Digital converters (ADC) 103, 104 to convert them into the digital domain. Optionally a digital clock recovery 105 may be applied. In the next step a frequency down-conversion 106 is applied to shift the signal into the baseband. In a further step, the down-converted signal is converted into the frequency domain, e.g. by using a fast-Fourier transform (FFT) 107.

With regards to the frequency down-conversion, two constraints need to be considered. Due to the high carrier frequencies employed in the optical domain, e.g. 193 THz, also the frequency offsets or intermediate frequencies may be large. By way of example, frequency offsets in the order of magnitude of 1 GHz have to be considered. Furthermore, the lasers used at the optical transmitter and at the optical receiver may exhibit considerable phase noise, which may be regarded as fluctuations in the frequency. By way of example, these fluctuations may be in the order of magnitude of several MHz for standard lasers. For special lasers with low phase noise these fluctuations may be around a few 100 kHz. Using the method and system according to the present invention, it is possible to take into account both constraints and to determine large frequency offsets and to compensate the phase noise of the transmission system at any moment.

In order to meet the above mentioned requirements, a two-stage frequency down-conversion scheme may be applied. Such a two-stage down-conversion scheme 200 is shown in Fig. 2. In a first stage 201 a first or raw estimate of the intermediate or offset frequency is determined. This raw estimation 201 is performed using a specifically designed OFDM training sequence. After determination of a raw estimate of the intermediate frequency, a first down-conversion 204 using this raw frequency estimate is performed. After the first down-conversion 204 the OFDM signal should be close to the baseband, only deviating from such baseband by a residual frequency offset. The residual frequency offset may be determined in a second stage 202 by performing a fine tuning of the estimate of the intermediate frequency. This fine tuning step is preferably performed using a pilot carrier, also referred to as pilot sub-carrier, which is inserted into the OFDM signal at the transmitter at a particular sub-carrier frequency. After determining a fine estimate of the residual frequency offset, the OFDM signal may be down-converted into the baseband using a second frequency down-conversion 205. Then the down-converted OFDM signal may be converted into the frequency domain using a FFT 203.

As already highlighted, the raw estimation of the intermediate frequency may be performed using training sequences of the OFDM signal. Typically the application of a training sequence enables only the correction of a very limited frequency offset which is bounded by +/- 50% of the OFDM sub-carrier spacing. This interval is also referred to as lock-in range. In situations with an OFDM sub-carrier spacing of 40MHz, these methods allow the determination of frequency offsets of +/- 20MHz, which is significantly below the requirements of optical OFDM systems.

One method for estimating the frequency offset in OFDM transmission systems uses OFDM training sequences $x_n$ which consist in a succession of two identical training sub-sequences $x_{1n}, x_{2n}$. For such training sequences the phase difference between the two received training sub-sequences $y_{1n}, y_{2n}$ - corresponding to the training sub-sequences $x_{1n}$, $x_{2n}$ that have been sent by the OFDM transmitter, transmitted over an optical channel with a transfer function $H_k$, submitted to noise $w_n$ and received by an OFDM receiver - is a good estimate for the intermediate frequency. This phase difference may be determined for training sequences used in any of the OFDM sub-carriers. Then the average phase difference across the OFDM sub-carriers may be used as a raw estimate of the intermediate frequency. The raw estimate has a standard deviation of roughly +/- 10% of the frequency determination or lock-in range, i.e. +/-10% of 50% of the OFDM sub-carrier spacing.

In mathematical terms, the above method may be described as follows. The OFDM training sequence $x_n$ is given by the N point complex modulation sequence:

$$x_n = \frac{1}{N} \sum_{k=-K}^{K} X_k \exp(2\pi j n k / N) \quad ,$$

with $n = 0,1,2,...,2N-1$ and $N \geq 2K-1$. After passing through the optical channel with the transfer function $H_k$ at the frequency of the $k^{th}$ OFDM sub-carrier and the noise $w_n$, the sequence at the OFDM receiver can be written as:

$$y_n = \frac{1}{N} \left[ \sum_{k=-K}^{K} X_k H_k \exp(2\pi j n (k + \varepsilon) / N) \right] + w_n \quad ,$$

wherein $\varepsilon$ is the relative frequency offset of the channel, i.e. the ratio of the frequency offset to the OFDM sub-carrier spacing. Performing the FFT of the sub-sequences $y_{1n}, y_{2n}$, wherein $y_{1n}$ comprises the samples $y_0,..., y_{N-1}$, and $y_{2n}$ comprises the samples $y_N,..., Y_{2N-1}$, yields:

$$Y_{1k} = \sum_{k=0}^{N-1} y_n \exp(2\pi j n k / N) \quad , \quad Y_{2k} = \sum_{k=N}^{2N-1} y_n \exp(2\pi j n k / N) \quad .$$

Taking into account the fact that $x_n = x_{n+N}$, i.e. that the N samples of the training sub-sequence $x_{1n}$ are equal to the N samples of the training sub-sequence $x_{2n}$, leads to the maximum likelihood estimate of the relative frequency offset

$$\hat{\varepsilon} = \frac{1}{2\pi} \tan^{-1} \left\{ \sum_{k=-K}^{K} \text{Im}\left[Y_{2k} Y_{1k}^*\right] / \sum_{k=-K}^{K} \text{Re}\left[Y_{2k} Y_{1k}^*\right] \right\} .$$

The details of the determination of the estimate of the relative frequency offset are outlined in P.H. Moose, "A Technique for Orthogonal Frequency Division Multiplexing Frequency Offset Correction", IEEE Transactions on Communications, Vol. 42, No. 10, October 1994. Notably sections II, III and the Appendix of the Moose document provide a derivation of the maximum likelihood estimate formula for $\varepsilon$ and also an analysis of the statistical properties of such estimate.

It is also shown in the Moose document that in the absence of noise the angle of the complex product $Y_{2k} Y_{1k}^*$ is equal to $2\pi\varepsilon$. This angle can be interpreted as the phase shift between the first training sub-sequence and the second training sub-sequence at the OFDM receiver. Consequently, the maximum likelihood estimate formula provided by the Moose document can be described as first determining the relative phase shift, i.e. the phase shift divided by $2\pi$, between two successive training sub-sequences and then determining the intermediate frequency by multiplying this relative phase shift value by the OFDM sub-carrier spacing. It should be noted that this method for determining a raw estimate of the intermediate frequency may also be referred to as the Moose method.

The fact that the Moose method only allows the determination of relative frequency offsets $|\varepsilon| < 0,5$, i.e. phase shifts between +/- $\pi$ , explains why the lock-in range of the Moose method is +/- 50% of the OFDM sub-carrier spacing.

As already highlighted, the raw estimation method outlined above, i.e. the Moose method, allows the determination of intermediate frequencies which do not exceed +/- 50% of the OFDM sub-carrier spacing. If larger frequency offsets are to be determined, the described raw estimation method may be modified by using a reduced number of OFDM sub-carriers during the training phase. By reducing the number of OFDM sub-carriers, the OFDM sub-carrier spacing is effectively increased, thereby increasing the range of application of the raw estimation method. As outlined earlier, such increase in OFDM sub-carrier spacing may be performed by a factor P. A drawback of this approach is, however, that when the number of OFDM sub-carriers is reduced also the quality of the raw estimate deteriorates as its standard deviation is proportional to 50% of the OFDM sub-carrier spacing.

By way of example, if an OFDM system comprises 128 sub-carriers with a sub-carrier spacing of 40MHz, then the lock-in range of the described method is +/-20MHz. The standard deviation of a raw frequency estimate is roughly +/- 2MHz. If the number of sub-carriers is reduced to 64, then the sub-carrier spacing may be increased to 80MHz and the lock-in range for determining intermediate frequencies is +/- 40MHz. However, the standard deviation of a raw frequency estimate is roughly +/- 4MHz. If this process is continued and eventually only 4 sub-carriers are used, then the lock-in range for determining intermediate frequencies may be increased up to +/- 640MHz, which is in the order of magnitude of the frequency offsets encountered in optical OFDM transmission systems. At the same time, however, the standard deviation of the raw frequency estimate has increased up to +/- 64MHz.

In summary, it should be noted that the method described above consists in reducing the number of sub-carriers transmitted along with the redundant training sequence. By doing this, the OFDM sub-carrier spacing is effectively increased. A raw estimate of the intermediate frequency is determined by applying the Moose method to the redundant training sequence. Due to the fact that - for the transmission of the redundant training sequence - the OFDM sub-carrier spacing is increased, also the lock-in range for determining a raw estimate of the intermediate frequency is increased proportionally. On the other hand, however, the standard deviation of the raw estimate increases.

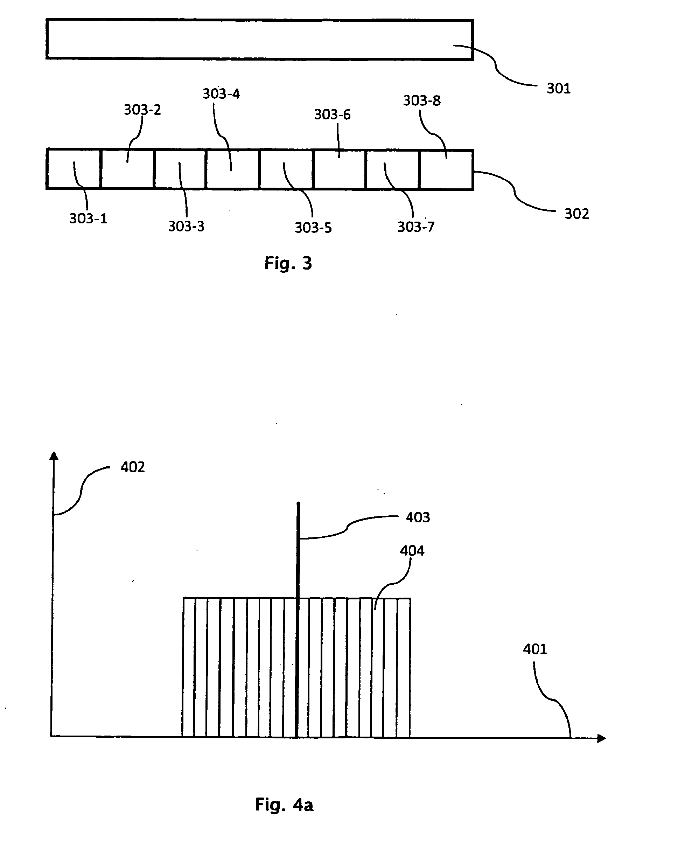

Consequently, by reducing the number of OFDM sub-carriers the lock-in range of the raw frequency estimation may be increased, while at the same time the accuracy of the raw estimate decreases. The latter problem may be overcome by using a highly redundant training sequence $x_n$ , which comprises an increased number T of successive identical training sub-sequences $x_{1n}, x_{2n}, ..., x_{Tn}$. In certain embodiments, T may be selected to equal P. The fragmentation of the training sequence is shown in Fig. 3, where a standard OFDM training sequence 301 is shown, which is converted into a highly redundant training sequence 302, which comprises T successive identical or redundant training sub-sequences 303-1 to 303-8. By way of example, the training sequences 301 and 302 may comprise 256 samples. If training sequence 302 is divided into T = 8 training sub-sequences 303-1 to 303-8, then each of the training sub-sequences 303-1 to 303-8 comprises 32 samples.

It should be noted that when partitioning the training sequence 302 into T identical training sub-sequences 303-1 to 303-8, the length of the overall training sequence 302 may be maintained at the length of the initial OFDM training sequence 301. It may be beneficial, however, to increase the length of the training sequence 302 beyond the length of the initial training sequence 301, in order to ensure a minimum length of the individual training sub-sequences 303-1 to 303-8. This may be relevant, if the number T of successive sub-sequences is high. While such increase of the length of the training sequence may increase the transmission overhead, it may also improve the accuracy of the raw estimate of the intermediate frequency. Having a training sequence comprising $T$ successive redundant or identical sub-sequences, the phase difference between $T$ pairs of directly succeeding sub-sequences may be determined using the raw estimation method described above. By way of example, the phase difference between the training sub-sequence 303-1 and 303-2, the phase difference between the training sub-sequence 303-2 and 303-3, the phase difference between the training sub-sequence 303-3 and 303-4 and so forth may be determined. By consequence, ($T$-1) raw estimates for the intermediate frequency may be determined. By calculating the average of these ($T$-1) raw estimates, the overall accuracy of the raw estimate may be increased up to the level of the unmodified raw estimation method. In other words, the accuracy can be improved, such that the standard deviation is +/- 10% of the range defined by 50% of the initial OFDM sub-carrier spacing, i.e. 50% of the unmodified OFDM sub-carrier spacing.

Overall, a method has been described for determining a raw estimate of the intermediate frequency in a lock-in frequency range which may be significantly larger than +/- 50% of the original / unmodified OFDM sub-carrier spacing and which maintains an accuracy of +/- 10% of the range defined by 50% of the OFDM sub-carrier spacing. In other words, this method may be described as determining a raw estimate of the intermediate frequency by applying the Moose method to a modified OFDM training signal. This modified training OFDM signal has an increased OFDM sub-carrier spacing, which may be obtained by reducing the number of OFDM sub-carriers for the transmission of the OFDM training signal. Furthermore, the training OFDM signal comprises an OFDM training sequence with a plurality of identical training sub-sequences. The Moose method is applied to a pair of successive or subsequent training sub-sequences and provides a raw estimate of the intermediate frequency. The quality of such raw estimate is improved, i.e. the standard deviation of the estimate is reduced, by averaging the raw estimates obtained by applying the Moose method to a plurality of pairs of successive training sub-sequences.

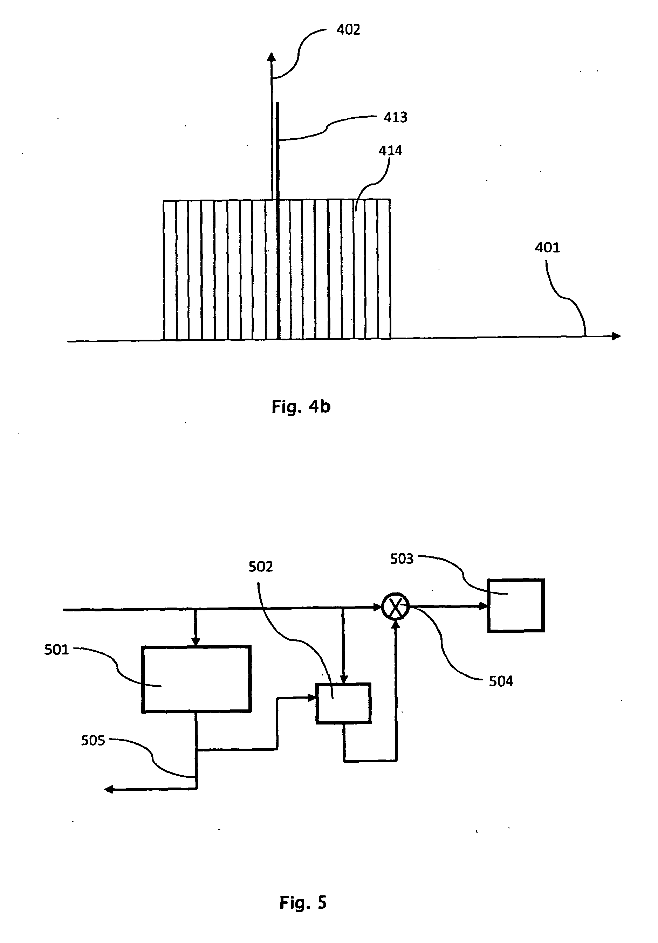

The raw estimate of the intermediate frequency may then be used to down-convert the OFDM signal in a first down-conversion stage 204. After such "raw down-conversion" the residual carrier is shifted close to the baseband, i.e. the OFDM center frequency which is typically the frequency zero. This is shown in Figs. 4a and 4b where typical OFDM signals 404, 414 at the OFDM receiver are shown. The axis of the graphs correspond to the frequency 401 and the amplitude 402. It should be noted that due to the fact that the underlying signals are complex signals comprising a I and a Q component, the mathematical frequencies may be negative. Fig. 4a illustrates the OFDM signal 404 before the "raw down-conversion", whereas Fig. 4b illustrates the OFDM signal 414 after "raw down-conversion". In both cases, the OFDM signals 404, 414 are positioned around a so-called OFDM center frequency 403, 413. At the OFDM transmitter this OFDM center frequency is preferably the frequency zero. On the other hand, at the OFDM receiver, the OFDM center frequency 403 - prior to performing the "raw down-conversion" typically corresponds to the intermediate frequency, which is the frequency offset between the actual carrier frequency at the OFDM receiver and the LO frequency. After "raw down-conversion", the OFDM center frequency 413 corresponds to a so-called residual frequency offset or residual carrier, which - depending on the quality of the raw estimate of the intermediate frequency - is more or less close to the frequency zero. This is illustrated in Fig. 4b, where the residual frequency offset 413 is shown as the offset of line 413 with regards to the axis 402.

According to the description provided above and in reference to the calculations provided in the Moose document, the residual frequency offset should have a mean value of zero and should deviate from this mean value with a standard deviation of approx. 10% of the range defined by 50% of the OFDM sub-carrier spacing. This lock-in range defined by 50% of the OFDM sub-carrier spacing will also be referred to as "half OFDM sub-carrier spacing" in the following so that the standard deviation of the residual frequency offset is approx. 10% of the half OFDM sub-carrier spacing.

It should be noted that when determining the accuracy of the raw estimate of the intermediate frequency, the phase noise of the lasers used in the optical transmission system may need to be considered. This phase noise may lead to a decreased accuracy of the raw estimate of the intermediate frequency and thereby to an increased standard deviation of the residual frequency offset. This increased standard deviation may need to be considered when designing appropriate means for determining such residual frequency offset, as will be outlined in the following.

In order to determine an accurate estimate of the current residual frequency offset, it may be beneficial to send a pilot carrier, also called a pilot sub-carrier, along with the OFDM signal. This pilot sub-carrier may be inserted at the OFDM center frequency, e.g. the frequency zero, during the modulation stage at the OFDM transmitter. By way of example, this may be performed by applying a DC current to the OFDM modulator. Figs. 4a and 4b illustrate such pilot carrier at the lines 403, 413 in the OFDM spectrogram. Such pilot carrier is preferably added continuously to the OFDM signal.

After the first down-conversion stage 204, the pilot carrier or the residual frequency offset 413 may be isolated by filtering the OFDM signal with a fixed low-pass filter. The cut-off frequency of the low-pass filter should be adjusted to the maximum possible frequency offset, which can be defined as a multiple of the standard deviation of the raw estimate. If the phase noise contribution is negligible, then the standard deviation of the residual frequency offset, and by consequence also the standard deviation of the pilot carrier, is approximated by +/- 10% of the half OFDM sub-carrier spacing. Therefore, the cut-off frequency of the low pass filter should be a multiple, e.g. 3-4, of this standard deviation value, in order to ensure a reliable isolation of the pilot carrier.

At the same time, the cut-off frequency should be sufficiently small in order to avoid the passing of OFDM sub-carrier frequencies in the neighborhood of the pilot carrier. These OFDM sub-carrier frequencies could then be confounded with the pilot carrier, and an unambiguous determination of the residual frequency offset would be compromised. Therefore, the cut-off frequency should be smaller than +/- 50% of the OFDM sub-carrier spacing. In order to take into account both constraints, i.e. reliable and unambiguous isolation of the pilot carrier, the cut-off frequency could be selected to be e.g. three times the standard deviation value, i.e. +/- 30% of the half OFDM sub-carrier spacing.

Using the described filtering method, the pilot carrier may be isolated and thereby the exact value of the residual frequency offset may be determined. This residual frequency offset may be applied in a second down-conversion stage 205 to transfer the OFDM signal into the baseband. It should also be noted that due to the fact that the residual frequency offset may be determined continuously for every signal sample, it is ensured that the true residual frequency offset, i.e. the offset which also includes momentary phase noise, is determined and compensated in the OFDM signal in the down-conversion stage 205.

It should be noted, however, that if the phase noise contribution is significant, then the standard deviation of the raw estimate of the intermediate frequency is typically increased. This increased standard deviation may need to be considered when designing an appropriate means for determining the residual frequency offset, as will be outlined at a later stage. One approach to overcome this problem may be to switch off OFDM sub-carriers in the neighborhood of the pilot sub-carrier, e.g. the one or two OFDM sub-carriers on the left and on the right of the pilot sub-carrier. By doing this, the cut-off frequency of the filter may be increased in order to ensure a reliable isolation of the pilot sub-carrier. On the other hand, the risk of passing OFDM sub-carriers is removed, as the neighboring OFDM sub-carriers of the pilot sub-carrier have been switched off.

Fig. 5 illustrates an alternative embodiment of an OFDM receiver using the described two-stage frequency estimation. Due to the fact that down-conversion operations are difficult to implement and cost-intensive at the bitrates used in optical transmission systems, it may be beneficial to limit the number of down-conversion stages. Fig. 5 illustrates an embodiment comprising a raw estimation unit 501 which corresponds to the unit 201 of Fig. 2. The raw estimate of the intermediate frequency provided by the unit 501 may then be used to tune a variable band pass filter 502. The tuning may be implemented by a look-up table for selecting the coefficients of an appropriate band pass filter. Other tuning means for the band pass filter may also be encompassed and are within the scope of the invention. The band pass filter is preferably centered around the raw estimate of the intermediate frequency and has a bandwidth which is determined in a similar manner as the cut-off frequency of the low pass filter described above. The bandwidth should be such that the pilot sub-carrier can be isolated without interfering with neighboring OFDM sub-carrier frequencies.

After isolation of the pilot carrier, an accurate estimate of the intermediate frequency is obtained as the sum of the raw estimate of the intermediate frequency and the relative frequency of the isolated pilot carrier, i.e. the determined residual frequency offset. Using this accurate estimate the down-conversion 504 of the OFDM signal into the baseband may be performed in one step. Alternatively, the isolated pilot sub-carrier may directly be used for down-conversion 504 of the OFDM signal into the baseband. This has the advantage that momentary phase-distortions, e.g. caused by phase noise contribution, are reflected in the isolated pilot sub-carrier and can thereby be removed from the OFDM signal during the , down-conversion step 504. The down-converted OFDM signal may then be transformed into the frequency domain by an FFT 503.

It should be noted that it may happen that the bandwidth requirements for the filters, which may be electrical analog or digital filters, are larger than the frequency spacing of OFDM sub-carriers and that OFDM sub-carriers may leak into the transmission or pass band of the filter. This may occur for example if lasers with relatively high phase noise contribution are used in the optical transmission system. Such phase noise may significantly increase the standard deviation of the raw estimate of the intermediate frequency. By way of example, if the sub-carrier spacing is 40MHz, then the raw estimation method described above leads to a standard deviation of approx. 2MHz. In addition, the phase noise of the lasers may increase this standard deviation by another 5MHz, leading to an overall standard deviation of 7MHz. If the cut-off frequency of the low pass filter is selected to be 3 times the overall standard deviation, i.e. 24MHz, or the bandwidth of the band pass filter is selected to be two times this value, i.e. 48MHz, then an unambiguous isolation of the pilot sub-carrier would not be possible, as also at least one OFDM sub-carrier would pass the filter. As a solution, the affected OFDM sub-carriers, i.e. the sub-carriers surrounding the pilot carrier may be switched off in order to increase available bandwidth for the estimation of the residual frequency offset. Alternatively or in addition, the signal power of the pilot carrier may be increased.

The above embodiments were described on the basis of a pilot sub-carrier that is inserted at the OFDM center frequency which is typically the frequency zero. It is also possible to insert the pilot sub-carrier at any pre-determined OFDM sub-carrier frequency. This pre-determined OFDM sub-carrier frequency may be taken into account at the OFDM receiver. By way of example, the "raw down-conversion" 204 may be performed using a frequency that is increased by the fixed pre-determined OFDM sub-carrier frequency. One may also select a band pass filter 502 which is centered around the raw estimate of the intermediate frequency plus the fixed pre-determined OFDM sub-carrier frequency.

It should be noted that the estimate of the intermediate frequency may also be used for other purposes. Depending on the required accuracy either the raw estimate or the accurate estimate of the intermediate frequency may be used. In particular, the estimate may be used in a feedback loop to control the carrier frequency of the LO frequency. This is illustrated in Figs. 2 and 5 by the feedback arrows 206 and 505, respectively.

In an embodiment, the estimate of the intermediate frequency is fed back to the local oscillator in order to limit the frequency offset. By way of example, the local oscillator may be tuned such that the estimate of the intermediate frequency is kept at a pre-defined value, e.g. zero. This may be done, e.g., by controlling the temperature of the LO laser.

The LO may furthermore be used as a transmitter source for the back channel from the OFDM receiver to the OFDM transmitter. If the LO frequency is moved or shifted based on the feedback 206 or 505, the whole OFDM signal which is transmitted on the back channel may shift with respect to filters in the optical path. In this case, it may be beneficial to redistribute the OFDM sub-carriers around the carrier frequency and to switch off OFDM sub-carriers on one side of the carrier frequency or band and to add additional sub-carriers on the other side of the carrier frequency or band. This management of OFDM sub-carriers may be implemented in a control unit. Such control unit may analyze the estimate of the intermediate frequency and control its influence on the LO frequency. It may also ensure that the OFDM band is arranged around the LO frequency, such that the overall transmission bandwidth is optimized. By consequence, the LO frequency /carrier frequency may not be exactly centered within the plurality of OFDM sub-carriers.

In addition, sub-carrier management may be made available when using the estimate of the intermediate frequency. A sub-carrier based performance monitoring may be applied in both terminals, i.e. in both OFDM transmitter/ receiver units, in parallel. The estimate of the intermediate frequency may be transmitted via a back channel and preferably via higher level management protocols, such as Optical Transport Network (OTN) or GMPLS. Using such feedback loop the carrier frequency may be controlled on the transmitter side. Furthermore, low quality sub-carriers may be identified at the OFDM receiver side and respective information may be transmitted back to the transmitter via back channel. The transmitter may then switch off the low quality sub-carriers after searching for and finding new higher quality sub-carriers, which replace the low quality sub-carriers.

During operation sub-carriers at the edges of the OFDM band as well as unused sub-carriers within the band may be checked with regards to their transmission quality. This means that new sub-carriers may be applied and verified using test sequences. At the OFDM receiver the performance of these sub-carriers is monitored and if an improved channel or sub-carrier is found, then this new sub-carrier will be used and lower performance channels can be switched off.

In addition, an interaction between the higher control and management layers with the physical layer may be beneficial. By way of example, a higher control layer may control the physical layer in order to supply sufficient channel capacity. This may be achieved by applying a sufficient number of OFDM sub-carriers. Alternatively, a variable sub-carrier modulation may be applied for high quality channels in order to improve the overall capacity at a given channel bandwidth.

Another advantage of an embodiment of the present invention is that a more correct knowledge of the frequency offset or of the intermediate frequency allows a better control on the layer of the sub-carriers. For instance, having correct information on the frequency offset, a power control may be employed in the system. As example, the number of sub-carriers may be controlled and adjusted to the determined frequency offset. This allows reducing the power consumption of the system which is an important aspect in modem system design ("GreenIT"). The present document describes a system and method for estimating the intermediate frequency at an optical OFDM receiver and for down-converting an OFDM signal into a baseband. By using a two stage approach of raw frequency estimation and subsequent residual frequency offset estimation, signal processing complexity can be reduced, while at the same time very accurate frequency estimates can be obtained. The invention is able to provide raw estimates of an intermediate frequency which are significantly greater than 50% of the OFDM sub-carrier spacing, while achieving a standard deviation of 10% of the OFDM half-band, i.e. 50% of the OFDM sub-carrier spacing. Furthermore, high levels of phase noise contribution may be dealt with by exactly compensating the phase noise at any time instance.

**Claims**

1. A method for down-converting an OFDM signal into a baseband, wherein the OFDM signal comprises a number of OFDM sub-carriers at an OFDM sub-carrier spacing, wherein the method comprises the steps of:

   - receiving, at an optical OFDM receiver (100), a training OFDM signal comprising a training sequence (302) and a pilot sub-carrier (403), wherein

      - the training sequence (302), when sent at a corresponding OFDM transmitter, comprises T identical training sub-sequences (303-1 - 303-8);
      - the pilot sub-carrier (403), when sent at the corresponding OFDM transmitter, corresponds to a pre-determined OFDM sub-carrier;

   - determining (201, 501) a phase shift between two training sub-sequences received at the OFDM receiver;
   - determining (201, 501) a first estimate (206, 505) of an intermediate frequency based on the determined phase shift;
   - isolating (202, 502) the pilot sub-carrier (403) using the first estimate (206, 505) of the intermediate frequency; and
   - down-converting the OFDM signal using the isolated pilot sub-carrier (403);

   wherein a maximum expected intermediate frequency is smaller than half the OFDM sub-carrier spacing.

2. The method according to claim 1, wherein

   - for the transmission of the training OFDM signal the OFDM stub-carrier spacing is increased by a factor P (302);
   - P is greater than 2; and
   - P is selected such that P/2 times the OFDM sub-carrier spacing is greater than the maximum expected intermediate frequency of the OFDM signal;

3. The method according to claim 1, wherein

- T is greater than 2;
- a plurality of phase shifts between two successive training sub-sequences received at the OFDM receiver is determined; and
- the first estimate (206, 505) of the intermediate frequency is determined (201, 501) based on the average of the plurality of phase shifts.

4. The method according to claim 3, wherein:

- the phase shifts between all pairs of successive training sub-sequences received at the OFDM receiver are determined; and
- the first estimate-(206, 505) of the intermediate frequency is determined (201, 501) based on the average of all the determined phase shifts.

5. The method according to claim 1, wherein

- the determination (201,501) of the first estimate (206, 505) of the intermediate frequency is performed periodically upon receipt of a training OFDM signal comprising a training sequence (302);
- OFDM payload signals comprise the pilot sub-carrier; and
- the isolation (202, 502) of the pilot sub-carrier is performed continuously for received OFDM payload signals.

6. The method according to claim 1, wherein

- the length of the training sequence (302) is fixed; and
- the length of the T training sub-sequences (303-1 - 303-8) shortens with increasing T.

7. The method according to claim 1, wherein the step of determining (201, 501) the phase shift between two training sub-sequences comprises the steps of:

- for a plurality of OFDM sub-carriers, determining the phase shift between two training sub-sequences received at the OFDM receiver; and
- averaging the determined phase shift for the plurality of OFDM sub-carriers.

8. The method according to claim 1, wherein the pilot sub-carrier (403) is isolated by using a band pass filter (502) with a center frequency corresponding to the first estimate (505) of the intermediate frequency plus the frequency of the pre-determined OFDM sub-carrier.

9. The method according to claim 1, wherein the step of isolating the pilot sub-carrier (403) comprises the steps of:

- down-converting (204) the OFDM signal by frequency shifting corresponding to the first estimate (206) of the intermediate frequency plus the frequency of the pre-determined OFDM sub-carrier;
- isolating (202) the pilot sub-carrier using a low pass filter.

10. Then method according to claims 7 or 8, wherein the bandwidth of the filter is smaller than the OFDM sub-carrier spacing.

11. The method according to claim 7 or 8, wherein

- the bandwidth of the filter is associated with the phase noise of a laser employed at the OFDM transmitter or the OFDM receiver; and
- one or more OFDM sub-carrier (404) around the pre-determined OFDM sub-carrier frequency is switched off, in order to allow for a reliable isolation of the pilot sub-carrier (403).

12. The method according to claim 1, wherein

- the first estimate (206, 505) of the intermediate frequency is fed back to a local oscillator at the OFDM receiver (100); and

- the local oscillator frequencys controlled by the first estimate (206, 505) of the intermediate frequency.

**13.** The method according to claim 1, wherein

- the first estimate (206, 505) of the intermediate frequency is fed back to a local oscillator at the OFDM transmitter; and
- the local oscillator frequency and the OFDM sub-carriers are controlled by the first estimate (206, 505) of the intermediate frequency.

**14.** A system for down-converting an OFDM signal into a baseband at an optical OFDM receiver (100), wherein the OFDM signal comprises a number of OFDM sub-carriers at an OFDM sub-carrier spacing, wherein the system comprises:

- a reception unit for receiving a training OFDM signal comprising a training sequence (302) and a pilot sub-carrier (403), wherein

- the training sequence (302), when sent at a corresponding OFDM transmitter, comprises T identical training sub-sequences (303-1 - 303-8);
- then pilot sub-carrier (403), when sent at the corresponding OFDM transmitter, corresponds to a pre-determined OFDM sub-carrier;
- a phase shift determination unit (201, 501) for determining a phase shift between two training sub-sequences received at the OFDM receiver;
- an intermediate frequency determination unit (201, 501) for determining a first estimate (206, 505) of an intermediate frequency based on the determined phase shift;
- a filter unit (202, 502) for isolating the pilot sub-carrier using the first estimate (206, 505) of the intermediate frequency; and
- a down-conversion unit (204, 205, 504) for down-converting the OFDM signal using the isolated pilot sub-carrier (403);

wherein a maximum expected intermediate frequency is smaller than half the OFDM sub-carrier spacing.


**Patentansprüche**

**1.** Ein Verfahren zum Hinuntermischen eines OFDM-Signals in ein Basisband, wobei das OFDM-Signal eine Anzahl von OFDM-Unterträgern an einem OFDM-Unterträgerabstand umfasst, wobei das Verfahren die folgenden Schritte umfasst:

- Empfangen, an einem optischen OFDM-Empfänger (100) eines OFDM-Trainingsignals mit einer Trainingsequenz (302) und einem Pilot-Unterträger (403), wobei:

- Die Trainingsequenz (302), wenn sie an einem entsprechenden OFDM-Sender gesendet wird, T identische Traininguntersequenzen (303-1 - 303-8) umfasst;
- der Pilot-Unterträger (403), wenn er an dem entsprechenden OFDM-Sender gesendet wird, einem vorbestimmten OFDM-Unterträger entspricht;

- Bestimmen (201, 501) einer Phasenverschiebung zwischen zwei am OFDM-Empfänger empfangenen Traininguntersequenzen;
- Bestimmen (201, 501) einer ersten Schätzung (206, 505) einer Zwischenfrequenz auf der Basis der bestimmten Phasenverschiebung;
- Isolieren (202, 502) des Pilot-Unterträgers (403) unter Verwendung der ersten Schätzung (206, 505) der Zwischenfrequenz; und
- Hinuntermischen des OFDM-Signals unter Verwendung des isolierten Pilot-Unterträgers (403);

wobei eine voraussichtliche maximale Zwischenfrequenz niedriger als der halbe OFDM-Unterträgerabstand ist.

**2.** Das Verfahren nach Anspruch 1, wobei:

- Der OFDM-Unterträgerabstand für die Übertragung des OFDM-Trainingsignals um einen Faktor P (302) erhöht wird;
- P größer als 2 ist; und
- P derart gewählt wird, dass P/2-mal den OFDM-Unterträgerabstand größer als die voraussichtliche maximale Zwischenfrequenz des OFDM-Signals ist.

3. Das Verfahren nach Anspruch 1, wobei:

- T größer als 2 ist;
- eine Mehrzahl von Phasenverschiebungen zwischen zwei am OFDM-Empfänger empfangenen aufeinanderfolgenden Traininguntersequenzen bestimmt werden; und
- die erste Schätzung (206, 505) der Zwischenfrequenz auf der Basis des Durchschnitts der Mehrzahl von Phasenverschiebungen bestimmt (201, 501) wird.

4. Das Verfahren nach Anspruch 3, wobei:

- Die Phasenverschiebungen zwischen allen am OFDM-Empfänger empfangenen aufeinanderfolgenden Traininguntersequenz-Paaren bestimmt werden; und
- die erste Schätzung (206, 505) der Zwischenfrequenz auf der Basis des Durchschnitts aller bestimmten Phasenverschiebungen bestimmt (201, 501) wird.

5. Das Verfahren nach Anspruch 1, wobei:

- Das Bestimmen (201, 501) der ersten Schätzung (206, 505) der Zwischenfrequenz periodisch nach dem Empfang eines OFDM-Trainingsignals, welches eine Trainingsequenz (302) enthält, durchgeführt wird;
- OFDM-Nutzlast-Signale den Pilot-Unterträger umfassen; und
- die Isolierung (202, 502) des Pilot-Unterträgers kontinuierlich für die empfangenen OFDM-Nutzlast-Signale durchgeführt wird.

6. Das Verfahren nach Anspruch 1, wobei:

Die Länge der Trainingsequenz (302) festgelegt ist; und
- sich die Länge der T Traininguntersequenzen (303-1 - 303-8) verkürzt, je höher T ist.

7. Das Verfahren nach Anspruch 1, wobei der Schritt des Bestimmens (201, 501) der Phasenverschiebung zwischen zwei Traininguntersequenzen die folgenden Schritte umfasst:

- Für eine Mehrzahl von OFDM-Unterträgern, Bestimmen der Phasenverschiebung zwischen zwei an dem OFDM-Empfänger empfangenen Traininguntersequenzen; und
- Berechnen des Durchschnitts der bestimmten Phasenverschiebung für die Mehrzahl von OFDM-Unterträgern.

8. Das Verfahren nach Anspruch 1, wobei der Pilot-Unterträger (403) unter Verwendung eines Bandpassfilters (502) mit einer Mittenfrequenz, welche der ersten Schätzung (505) der Zwischenfrequenz plus die Frequenz des vorbestimmten OFDM-Unterträgers entspricht, isoliert wird.

9. Das Verfahren nach Anspruch 1, wobei der Schritt des Isolierens des Pilot-Unterträgers (403) die folgenden Schritte umfasst:

- Hinuntermischen (204) des OFDM-Signals durch eine Frequenzverschiebung, welche der ersten Schätzung (206) der Zwischenfrequenz plus die Frequenz des vorbestimmten OFDM-Unterträgers entspricht,
- Isolieren (202) des Pilot-Unterträgers unter Verwendung eines Tiefpassfilters.

10. Das Verfahren nach Anspruch 7 oder 8, wobei die Bandbreite des Filters kleiner ist als der OFDM-Unterträgerabstand.

11. Das Verfahren nach Anspruch 7 oder 8, wobei:

- Die Bandbreite des Filters mit dem Phasenrauschen eines am OFDM-Sender oder am OFDM-Empfänger verwendeten Lasers assoziiert ist, und

- ein oder mehrere OFDM-Unterträger (404) in der Nähe der vorbestimmten OFDM-Unterträgerfrequenz ausgeschaltet sind, um eine betriebssichere Isolierung des Pilot-Unterträgers (403) zu gewährleisten.

**12.** Das Verfahren nach Anspruch 1, wobei:

- Die erste Schätzung (206, 505) der Zwischenfrequenz an einen lokalen Oszillator am OFDM-Empfänger (100) zurückgespeist wird; und
- die Frequenz des lokalen Oszillators von der ersten Schätzung (206, 505) der Zwischenfrequenz gesteuert wird.

**13.** Das Verfahren nach Anspruch 1, wobei:

- Die erste Schätzung (206, 505) der Zwischenfrequenz an einen lokalen Oszillator am OFDM-Sender (100) zurückgespeist wird; und
- die Frequenz des lokalen Oszillators und die OFDM-Unterträger von der ersten Schätzung (206, 505) der Zwischenfrequenz gesteuert werden.

**14.** Ein System zum Hinuntermischen eines OFDM-Signals in ein Basisband an einem optischen OFDM-Empfänger (100), wobei das OFDM-Signal eine Anzahl von OFDM-Unterträgern an einem OFDM-Unterträgerabstand umfasst, wobei das System umfasst:

- Eine Empfangseinheit zum Empfangen eines OFDM-Signals mit einer Trainingsequenz (302) und einem Pilot-Unterträger (403), wobei:

  - Die Trainingsequenz (302), wenn sie an einem entsprechenden OFDM-Sender gesendet wird, T identische Traininguntersequenzen (303-1 - 303-8) umfasst;
  - der Pilot-Unterträger (403), wenn er an dem entsprechenden OFDM-Sender gesendet wird, einem vorbestimmten OFDM-Unterträger entspricht;

  - Eine Phasenverschiebung-Bestimmungseinheit (201, 501) zum Bestimmen einer Phasenverschiebung zwischen zwei am OFDM-Empfänger empfangenen Traininguntersequenzen;
  - Eine Zwischenfrequenz-Bestimmungseinheit (201, 501) zum Bestimmen einer ersten Schätzung (206, 505) einer Zwischenfrequenz auf der Basis der bestimmten Phasenverschiebung;
  - Eine Filtereinheit (202, 502) zum Isolieren des Pilot-Unterträgers unter Verwendung der ersten Schätzung (206, 505) der Zwischenfrequenz; und
  - Eine Hinuntermischeinheit (202, 205, 504) zum Hinuntermischen des OFDM-Signals unter Verwendung des isolierten Pilot-Unterträgers (403);

wobei eine voraussichtliche maximale Zwischenfrequenz niedriger als der halbe OFDM-Unterträgerabstand ist.

**Revendications**

**1.** Procédé pour la conversion descendante en bande de base d'un signal OFDM, dans lequel le signal OFDM comprend un certain nombre de sous-porteuses OFDM à un espacement entre sous-porteuses OFDM, dans lequel le procédé comprend les étapes de :

- recevoir, au niveau d'un récepteur OFDM optique (100), un signal OFDM d'apprentissage comprenant une séquence d'apprentissage (302) et une sous-porteuse pilote (403), dans lequel

  - la séquence d'apprentissage (302), lorsqu'elle est envoyée au niveau d'un émetteur OFDM correspondant, comprend T sous-séquences d'apprentissage identiques (303-1 - 303-8) ;
  - la sous-porteuse pilote (403), lorsqu'elle est envoyée au niveau de l'émetteur OFDM correspondant, correspond à une sous-porteuse OFDM prédéterminée ;

  - déterminer(201, 501) un déphasage entre deux sous-séquences d'apprentissage reçues au niveau du récepteur OFDM ;
  - déterminer (201, 501) une première estimation (206, 505) d'une fréquence intermédiaire à partir du déphasage déterminé ;

- isoler (202, 502), la sous-porteuse pilote (403) en utilisant la première estimation (206, 505) de la fréquence intermédiaire ; et
- effectuer une conversion descendante du signal OFDM en utilisant la sous-porteuse pilote (403) isolée ;

dans lequel une fréquence intermédiaire maximale prévue est inférieure à la moitié de l'espacement entre sous-porteuses OFDM.

**2.** Procédé selon la revendication 1, dans lequel

- pour la transmission du signal OFDM d'apprentissage, l'espacement entre sous-porteuses OFDM est augmenté d'un facteur P (302) ;
- P est supérieur à 2 ; et
- P est choisi de tel sorte que P/2 fois l'espacement entre sous-porteuses OFDM est supérieur à la fréquence intermédiaire maximale prévue du signal OFDM;

**3.** Procédé selon la revendication 1, dans lequel

- T est supérieur à 2 ;
- une pluralité de déphasages entre deux sous-séquences d'apprentissage successives reçues au niveau du récepteur OFDM est déterminée ; et
- la première estimation (206, 505) de la fréquence intermédiaire est déterminée (201, 501) à partir de la moyenne de la pluralité de déphasages.

**4.** Procédé selon la revendication 3, dans lequel :

- les déphasages entre toutes les paires de sous-séquences d'apprentissage successives reçues au niveau du récepteur OFDM sont déterminées ; et
- la première estimation (206, 505) de la fréquence intermédiaire est déterminée (201, 501) à partir de la moyenne de tous les déphasages déterminés.

**5.** Procédé selon la revendication 1, dans lequel

- la détermination (201, 501) de la première estimation (206, 505) de la fréquence intermédiaire est effectuée périodiquement à la réception d'un signal OFDM d'apprentissage comprenant une séquence d'apprentissage (302) ;
- les signaux de charge utile OFDM comprennent la sous-porteuse pilote ; et
- l'isolement (202, 502) de la sous-porteuse pilote est effectué en continu pour les signaux de charge utile OFDM reçus.

**6.** Procédé selon la revendication 1, dans lequel

- la longueur de la séquence d'apprentissage (302) est fixée ; et
- la longueur des T sous-séquences d'apprentissage (303-1 - 303-8) raccourcit quand T augmente.

**7.** Procédé selon la revendication 1, dans lequel l'étape de détermination (201, 501) du déphasage entre deux sous-séquences d'apprentissage comprend les étapes de :

- pour une pluralité de sous-porteuses OFDM, déterminer le déphasage entre deux sous-séquences d'apprentissage reçues au niveau du récepteur OFDM ; et
- moyenner le déphasage déterminé pour la pluralité de sous-porteuses OFDM.

**8.** Procédé selon la revendication 1, dans lequel la sous-porteuse pilote (403) est isolée en utilisant un filtre passe-bande (502) ayant une fréquence centrale correspondant à la première estimation (505) de la fréquence intermédiaire, plus la fréquence de la sous-porteuse OFDM prédéterminée.

**9.** Procédé selon la revendication 1, dans lequel l'étape d'isolement de la sous-porteuse pilote (403) comprend les étapes de :

- effectuer la conversion descendante (204) du signal OFDM par un décalage de fréquence correspondant à la première estimation (206) de la fréquence intermédiaire, plus la fréquence de la sous-porteuse OFDM prédéterminée ;
- isoler (202) la sous-porteuse pilote en utilisant un filtre passe-bas.

10. Procédé selon les revendications 7 ou 8, dans lequel la bande passante du filtre est inférieure à l'espacement entre sous-porteuses OFDM.

11. Procédé selon les revendications 7 ou 8, dans lequel

- la bande-passante du filtre est associée au bruit de phase d'un laser employé au niveau de l'émetteur OFDM ou du récepteur OFDM ; et
- une ou plusieurs sous-porteuses OFDM (404) autour de la fréquence de sous-porteuse OFDM prédéterminée sont coupées, afin de permettre un isolement fiable de la sous-porteuse pilote (403).

12. Procédé selon la revendication 1, dans lequel

- la première estimation (206, 505) de la fréquence intermédiaire est renvoyée à un oscillateur local au niveau du récepteur OFDM (100) ; et
- la fréquence de l'oscillateur local est commandée par la première estimation (206, 505) de la fréquence intermédiaire.

13. Procédé selon la revendication 1, dans lequel

- la première estimation (206, 505) de la fréquence intermédiaire est renvoyée à un oscillateur local au niveau de l'émetteur OFDM ; et
- la fréquence de l'oscillateur local et les sous-porteuses OFDM sont commandées par la première estimation (206, 505) de la fréquence intermédiaire.

14. Système pour la conversion descendante en bande de base d'un signal OFDM au niveau d'un récepteur OFDM optique (100), dans lequel le signal OFDM comprend un certain nombre de sous-porteuses OFDM à un espacement entre sous-porteuses OFDM, dans lequel le système comprend :

- une unité de réception pour recevoir un signal OFDM d'apprentissage comprenant une séquence d'apprentissage (302) et une sous- porteuse pilote (403), dans laquelle

- la séquence d'apprentissage (302), lorsqu'elle est envoyée au niveau d'un émetteur OFDM correspondant, comprend T sous-séquences d'apprentissage identiques (303-1 - 303-8) ;
- la sous-porteuse pilote (403), lorsqu'elle est envoyée au niveau de l'émetteur OFDM correspondant, correspond à une sous-porteuse OFDM prédéterminée ;
- une unité de détermination de déphasage (201, 501) pour déterminer un déphasage entre deux sous-séquences d'apprentissage reçues au niveau du récepteur OFDM ;
- une unité de détermination de fréquence intermédiaire (201, 501) pour déterminer une première estimation (206, 505) d'une fréquence intermédiaire à partir du déphasage déterminé ;
- une unité de filtrage (202, 502) pour isoler la sous-porteuse pilote en utilisant la première estimation (206, 505) de la fréquence intermédiaire ; et
- une unité de conversion descendante (204, 205, 504) pour effectuer une conversion descendante du signal OFDM en utilisant la sous-porteuse pilote isolée (403) ;

dans lequel une fréquence intermédiaire maximale prévue est inférieure à la moitié de l'espacement entre sous-porteuses OFDM.

101    103    105    106    107

Data I

Data Q

102    104

**Fig. 1**

100

204    205

201

203

206

202

200

**Fig. 2**

**Fig. 3**

**Fig. 4a**

402

413

414

401

**Fig. 4b**

502

503

501

504

505

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060171488 A

- EP 1724941 A

**Non-patent literature cited in the description**

- **P.H. Moose.** A Technique for Orthogonal Frequency Division Multiplexing Frequency Offset Correction. *IEEE Transactions on Communications,* October 1994, vol. 42 (10